# EUROPÄISCHE PATENTSCHRIFT

(11) **EP 1 556 156 B1**
(45) Veröffentlichungstag und Bekanntmachung des Hinweises auf die Patenterteilung: **08.10.2008**
(21) Anmeldenummer: 03790859.7
(22) Anmeldetag: 05.08.2003
(51) Int. Cl.: B01D 46/00

(54) **FILTERSYSTEM**
FILTER SYSTEM
SYSTEME DE FILTRAGE

(30) Priorität: 08.08.2002 DE 10236548
(43) Veröffentlichungstag der Anmeldung: 27.07.2005
(60) Teilanmeldung: 08103516.4
(73) Patentinhaber: MANN+HUMMEL GmbH, 71638 Ludwigsburg (DE)
(72) Erfinder: LAMPERT, Johannes, 71686 Remseck-Aldingen (DE); MAYER, Gerhard, 74385 Pleidelsheim (DE); PELZ, Andreas, 71706 Markgröningen (DE)
(74) Vertreter: Voth, Gerhard
(86) Internationale Anmeldenummer: PCT/EP2003/008655
(87) Internationale Veröffentlichungsnummer: WO 2004/020075

(56) Entgegenhaltungen:
- EP-A- 0 269 895
- WO-A-00/50153
- WO-A-01/95996
- WO-A-97/40908
- WO-A-02/098539
- DE-A- 3 617 420

## Beschreibung

### Stand der Technik

Die Erfindung betrifft ein Filtersystem nach dem Oberbegriff des Anspruches 1.

In der Druckschrift US 6 322 602 B2 wird ein Luftfilter beschrieben, der in einem zylindrischen Filtergehäuse ein axial zu durchströmendes Filterelement aufweist. Der Aufnahmeraum zur Aufnahme des Filters im Filtergehäuse ist an einer axialen Stirnseite im Bereich der Anströmseite des Filters von einem Gehäusedeckel zu erschließen, welcher zum Austausch des Filterelements gelöst wird, woraufhin das Filterelement aus dem Aufnahmeraum axial herausgenommen und durch ein neues Filterelement ersetzt werden kann.

Diese Ausführung weist den Nachteil auf, dass zum Austausch des Filterelements der Gehäusedeckel im Anströmbereich entfernt werden muss, was zunächst eine Demontage des gesamten Filtergehäuses aus seiner Einbauposition voraussetzt, weil der Gehäusedeckel mit den Zuleitungen für die Zufuhr der zu reinigenden Luft verbunden ist. Ein Austausch des Filterelementes ist daher nur mit einem erheblichen Aufwand zu bewerkstelligen, wodurch die Wartungsdauer ansteigt und erhebliche Wartungskosten anfallen.

Die Druckschrift WO 97/40908 beschreibt einen konisch geformten, runden Wickelfilter. Der Wickelfilter ist mit einer axial zwischen zwei Gehäuseteilen verpressten Dichtung versehen. Die Dichtung ist an einem Dichtungsträger angebracht.
Die Druckschrift WO 00/50153 beschreibt einen ovalen Wickelfilter mit einem Griff, der an einer Kunststoffplatte angebracht ist, die als Kern des Wickelfilters dient. Der Griff erstreckt sich axial vom Wickelfilter. Die Dichtung wird beim Einsetzen des Wickelfilters gebogen.

Der Erfindung liegt das Problem zu Grunde, einen konstruktiv einfach aufgebauten Filter zu schaffen, welcher mit geringem Aufwand gewartet werden kann. Ferner soll auch die Raumausnutzung im Filtergehäuse verbessert werden.

Dieses Problem wird erfindungsgemäß mit den Merkmalen des Anspruches 1 gelöst. Die Unteransprüche geben zweckmäßige Weiterbildungen an.

Der wesentliche Vorteil der Erfindung liegt darin, dass das Filterelement mit einer Profildichtung versehen ist, wobei diese Profildichtung am Umfang des Filterelements verläuft. Diese Dichtung bildet einen Wulst der zwischen den beiden Gehäuseteilen einspannbar ist. Damit wird ein System geschaffen, bei welchem Längentoleranzen des Filterelements bezüglich der Dichtwirkung oder der Gehäuseabmessungen völlig unkritisch sind.

In der Erfindung, wird vorgeschlagen, den Wulst annäherungsweise rechteckförmig zu gestalten. Dies erleichtert in ganz besonderer Weise die Einspannung zwischen den beiden Gehäuseteilen.

Der Wickelfilter wird mit einem Kern versehen, dieser Kern ist eine Kunststoffplatte die als Grundlage für die Filterwicklung dient, gleichzeitig weist diese Kunststoffplatte einen Haltegriff auf, der sich axial, ausgehend von dem Wickelfilter, nach außen erstreckt und der eine gute Handhabung des Filterelements ermöglicht.

Gemäß einer weiteren Ausgestaltung kann das Filterelement ein Gehäusemitteilteil aufweisen, welches zwischen den beiden Gehäusehälften angeordnet ist, dabei wird das Gehäusemittelteil auf beiden Seiten mit den entsprechenden Gehäusehälften verspannt. Diese Verspannung kann in einer weiteren Ausgestaltung über Spannbänder erfolgen. Diese Spannbänder greifen über Flanschbereiche der zu verbindenden Teile und stellen eine zuverlässige Verbindung dar.

In einer weiteren Ausgestaltung der Erfindung ist dem Filterelement ein Vorfilter vorgeschaltet, dieser Vorfilter kann ein Zyklonabscheider sein, es kann sich aber auch um einen einfachen Grobfilter in Form eines Netzes handeln. Bei einem Zyklonvorabscheider wird ein hoher Abscheidegrad von groben Partikeln erreicht. Zweckmäßigerweise ist dieser Filter ein Zyklonarray, welches sich über die gesamte stirnseitige Fläche des Filterelements erstrecken kann.

Weiterbildungsgemäß ist dem Filterelement ein Sekundärfilter nachgeschaltet.

Dieser Sekundärfilter hat die Aufgabe, bei einem Austausch des Filterelements den Eintrag von Partikeln in die Reinluftleitung zu verhindern.

Das Gehäuse ist reinluftseitig, gemäß einer Weiterbildung der Erfindung, mit einem Anschlußstutzen versehen. An diesem läßt sich ein Reinluftrohr befestigen. Der Übergang zwischen Reinluftrohr und Gehäuse kann strömungsgünstig optimiert sein um Luftwirbel zu vermeiden.

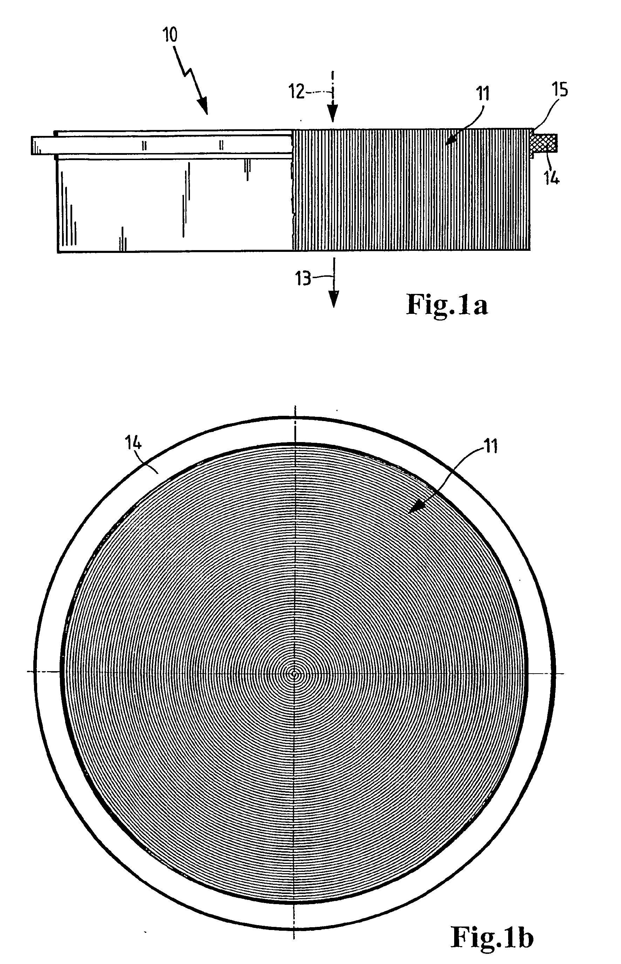

Die Erfindung wird nachfolgend anhand von Ausführungsbeispielen näher erläutert, wobei Fig 1a und 1b nicht von den Ansprüchen umfasst sind.

Es zeigt:
- Figur 1 a: eine Teilschnittdarstellung eines Filterelements,
- Figur 1 b: die Draufsicht auf die in Figur 1a gezeigte Teilschnittdarstellung,
- Figur 2: den Teilschnitt eines weiteren Filterelements,
- Figur 3: ein Filtersystem in einer teilweise geschnittenen Darstellung,
- Figur 4: ein weiteres Filtersystem in einer Schnittdarstellung.

Die Darstellung gemäß Figur 1a zeigt einen Filtereinsatz 10, mit einem Filterwickel 11 der aus einem gewellten Filterpapier oder Filtervlies besteht. Durch die Wellenform entstehen längs gerichtete Kanäle. Diese Kanäle sind wechselseitig verschlossen, so dass die einströmende Luft gemäß Pfeil 12 in die oben geöffneten Kanäle einströmt, das Filtermedium, dass heißt das Filterpapier oder Filtervlies durchdringt und gemäß Pfeil 13 gereinigt nach unten abströmt. Der gesamte Filterwickel wird am Umfang von einer rechteckförmig gestalteten Dichtung 14 umgeben. Diese Dichtung besteht beispielsweise aus PUR-Schaum oder aus einem Elastomer und ist umlaufend mit dem Filterwickel verklebt. Die Dichtung weist einen Dichtungsfuß 15 auf, der geringfügig breiter ist als die Dichtung und eine optimale Verbindung zu dem Filterwickel gewährleistet.

Figur 1b zeigt in der Draufsichtdarstellung den Filterwickel 11, der ausgehend von einem Filterkern endlos gewickelt ist und an seinem äußeren Umfang die Dichtung 14 trägt. Die Herstellung eines solchen Elements ist besonders wirtschaftlich. Der Vorteil des Elements liegt in der hohen wirksamen Filterfläche.

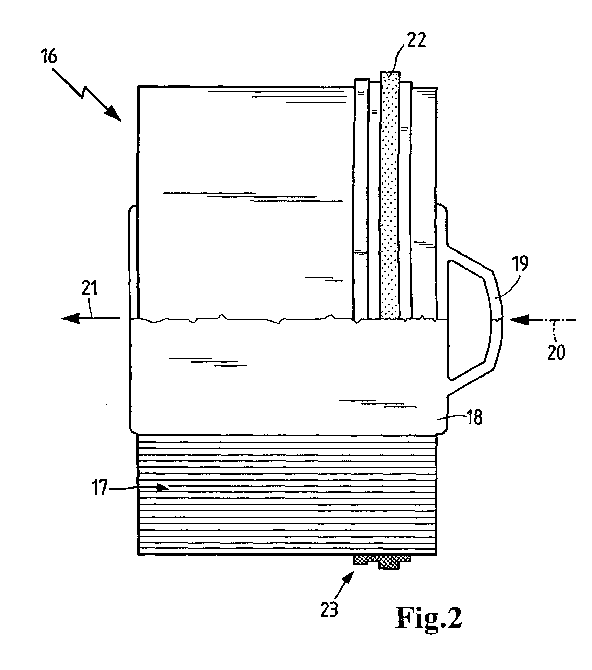

Figur 2 zeigt einen weiteren Filtereinsatz 16. Dieser besteht ebenfalls aus einem Filterwickel 17. Der Filterwickel ist jedoch in seinem Kern an einem Schwert 18 befestigt. Dieses ist ein flaches Kunststoffelement, welches an seinem rechtsseitigen Ende, das heißt an der Anströmseite mit einem Griff 19 versehen ist. Dieser Griff ermöglicht das Einsetzen oder Herausnehmen des Filterelements auch unter schwierigen Bedingungen. Außerdem schützt der Griff vor einer unsachgemäßen Handhabung. Die Verbindung zwischen dem Schwert 18 und dem Filterwickel erfolgt über eine Klebeverbindung. Es genügt völlig den Kleber an den Stirnseiten des Schwerts, das heißt an der rohluftseitigen Öffnung, gemäß Pfeil 20 und an der reinluftseitigen Öffnung zu verteilen.

Die ungereinigte Luft strömt, wie bereits erwähnt gemäß Pfeil 20 durch das Filterelement durch, wird gereinigt und verläßt gemäß Pfeil 21 das Element.

Auch dieser Filtereinsatz trägt eine umlaufende Dichtung 22, die beispielsweise aus PUR-Schaum besteht und ein rechteckförmiges Profil aufweist. Die Dichtung weist zur zuverlässigen Befestigung eine bestimmte axiale Erstreckung auf und geht damit von der Rechteckform über in ein flaches Dichtungsband 23.

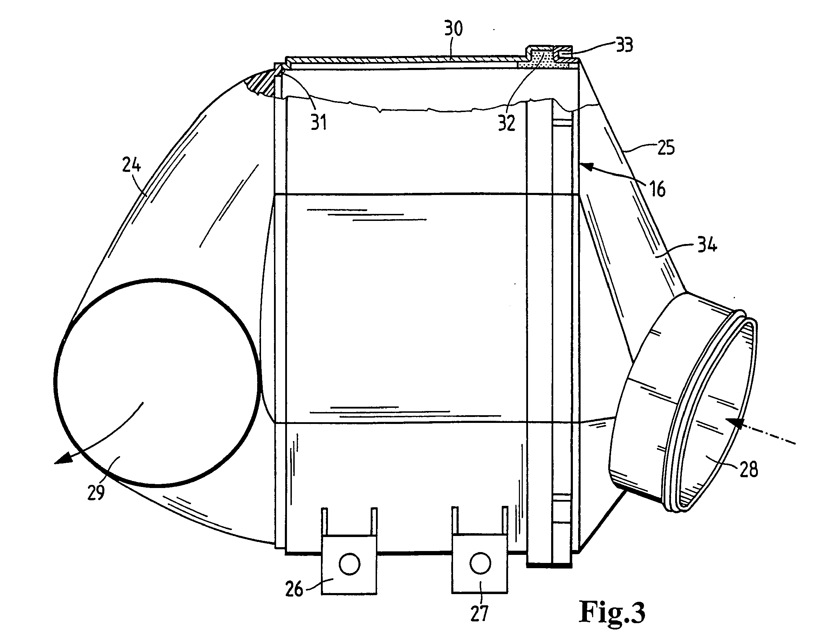

Das Filtersystem gemäß Figur 3 besteht aus einem Gehäuse 24, einem Deckel 25 und einem Filtereinsatz 16, der die Merkmale des in Figur 2 gezeigten Filters aufweist. Gleiche Teile sind mit gleichen Bezugszeichen versehen. Das Gehäuse ist mit Befestigungslaschen 26, 27 versehen. Weitere Befestigungslaschen können sich im oberen Bereich befinden und sind hier nicht dargestellt. Der Deckel 25 ist mit einem Rohlufteinlaß 28 ausgestattet, das Gehäuse 24 mit einem Reinluftauslaß 29. An diesem Reinluftauslaß 29 wird üblicherweise ein Reinluftschlauch angeschlossen der mit dem Ansaugtrakt einer Brennkraftmaschine verbunden ist. Innerhalb des oval gestalteten Bereichs 30 des Gehäuses, befindet sich der Filtereinsatz 16, er stützt sich an seinem linksseitigen Ende an einer umlaufenden ringförmigen Anlagefläche 31 ab und wird auf der gegenüberliegenden Seite in einer Dichtungsnut 32 geführt. Diese Dichtungsnut wird verschlossen durch einen umlaufenden Dichtungsrand 33 des Deckels 25. Die Befestigung des Deckels am Gehäuse erfolgt durch hier nicht dargestellte Schnappverbindungen oder durch Verbindungsklammern. Eine weitere Befestigung für den Filtereinsatz ist nicht erforderlich.

Sofern eine Vorabscheidung erforderlich ist, kann sich innerhalb des kegelförmigen Bereichs 34 oder innerhalb des Rohlufteinlaß 28 ein Zyklon oder ein Multizyklon befinden. Sofern eine Sekundärfilterelement vorgesehen ist kann dies im Reinluftbereich des Gehäuses 24 angeordnet sein.

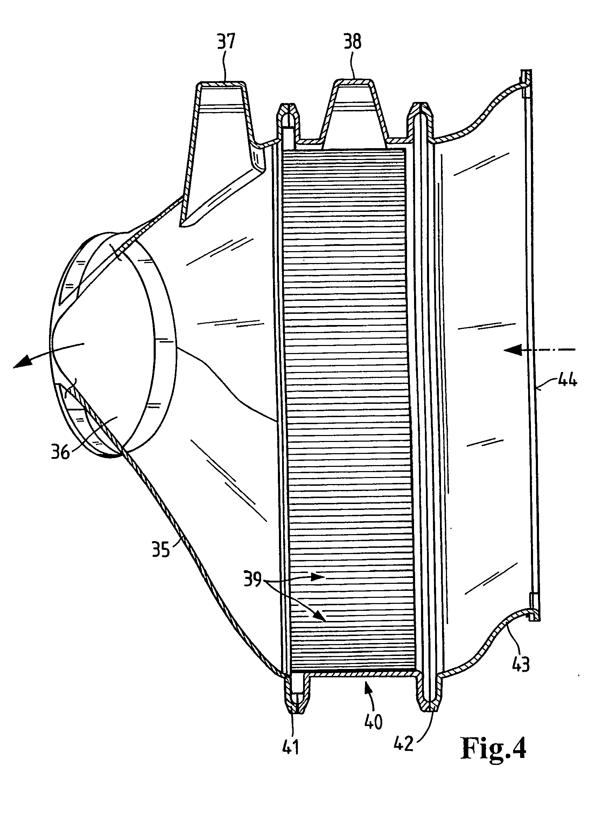

Figur 4 zeigt eine weitere Darstellung eines Filtersystems bei welchem ein Filtereinsatz gemäß Figur 1 zur Anwendung kommt. Das Gehäuse 35 mit dem linksseitig angeordneten Reinluftauslaß 36 kann über Befestigungslaschen 37, 38 an einer Grundstruktur fixiert werden. In der hier gezeigten Darstellung trägt das Filterelement 39 ein Gehäusemittelteil 40. Die Trennung zwischen Gehäuse und Gehäusemittelteil erfolgt im Flanschbereich 41 und im Flanschbereich 42. Das rechtsseitig angeordnete Gehäuse 43 hat einen rechteckförmigen Rohlufteinlaß 44. Die Rechteckform geht strömungsgünstig über in die runde Form des Filtereinsatzes. Zum Entfernen des Filtereinsatzes werden die Flanschbereiche 41, 42 getrennt. Der Filtereinsatz kann mit dem Gehäuesmittelteil 44 entnommen werden. Es besteht die Möglichkeit, diesen Filtereinsatz aus dem Gehäusemittelteil zum entfernen bzw. den Filtereinsatz zu erneuern. Die Fixierung der drei Gehäuseteile miteinander erfolgt über Spannbänder, die beispielsweise auch zum Verschließen von Behältern jeglicher Art dienen. Der Rohlufteinlaß 44 kann zur Vermeidung des Eintritts von Grobpartikeln mit einem Gitternetz versehen sein.

## Patentansprüche

1. Filtersystem, insbesondere für die Ansaugluft einer Brennkraftmaschine, umfassend:
i) ein Gehäuse mit wenigstens zwei Gehäuseteilen (24, 25), wobei das Gehäuse im Bereich der Befestigung des Filterelements teilbar ist und
ii) ein Filterelement (10), wobei das Filterelement (10) als Wickelfilter ausgebildet ist,
a. wobei der Wickelfilter (10) mit einer Profildichtung (14 )versehen ist, die am Umfang des Filterwickels (11) verläuft und die Profildichtung (14) einen Wulst bildet, welcher zwischen den beiden Gehäuseteile (24, 25) einspannbar ist, und die Profildichtung eine umlaufende Dichtung ist, die ein rechteckförmigen Profil aufweist und aus PUR-Schaum besteht;
b. wobei der Wickelfilter (10) als Kern eine Kunststoffplatte (18) in Form eines flachen Kunststoffelementes aufweist, welches an der Anströmseite mit einem Griff (19) versehen ist, der sich axial, ausgehend von dem Wickelfilter (10) nach außen erstreckt.

2. Filtersystem nach Anspruch 1, **dadurch gekennzeichnet, dass** das Filterelement (10) ein Gehäusemittelteil (40) aufweist welches zwischen den beiden Gehäusehälften (35, 43) angeordnet ist.

3. Filtersystem nach Anspruch 2, **dadurch gekennzeichnet, dass** die Verbindung des Gehäusemittelteils (40) mit den Gehäusehälften (35,43) über Spannbänder erfolgt.

4. Filtersystem nach einem der vorherigen Ansprüche, **dadurch gekennzeichnet, dass** dem Filterelement (10) ein Vorfilter vorgeschaltet ist.

5. Filtersystem nach Anspruch 4, **dadurch gekennzeichnet, dass** das Vorfilter als Zyklonvorabscheider ausgeführt ist.

6. Filtersystem nach einem der vorherigen Ansprüche, **dadurch gekennzeichnet, dass** dem Filterelement ein Sekundärfilter nachgeschaltet ist.

7. Filtersystem nach einem der vorherigen Ansprüche, **dadurch gekennzeichnet, dass** das Gehäuse reinluftseitig mit einem Anschlussstutzen versehen ist zum Befestigen eines Reinluftrohres, wobei der Übergang zwischen Filterelement und Anschlussstutzen des Gehäuses im Wesentlichen kegelförmig gestaltet ist.

8. Filtersystem nach einem der vorherigen Ansprüche, **dadurch gekennzeichnet, dass** der Rohlufteintrittsquerschnitt im Wesentlichen rechteckförmig gestaltet ist und der Übergang zwischen den rechteckförmigen Querschnitt und dem runden bzw. ovalen Filterelement strömungsgünstig verläuft.

## Claims

1. Filter system, in particular for the intake air of an internal combustion engine, comprising:
i) a housing with at least two housing components (24, 25), the housing being separable in the fastening area of the filter element and
ii) a filter element (10), the filter element (10) being designed as winding filter,
a. the winding filter (10) being provided with a profile gasket (14) which extends at the circumference of the winding filter (11) and forms a bead which can be clamped between both housing components (24, 25), and the profile gasket (14) being a circumferential sealing which features a rectangular profile and consists of PUR foam;
b. the winding filter (10) featuring a plastic plate (18) as core in the shape of a flat plastic element which is provided with a handle (19) at the on-flow side which extends axially from the winding filter (10) outwards.

2. Filter system according to claim 1, **characterized in that** the filter element (10) features a central housing component (40) which is arranged between both housing parts (35, 43).

3. Filter system according to claim 2, **characterized in that** the connection of the central housing component (40) with both housing parts (35, 43) is realized by means of clamping straps.

4. Filter system according to one of the above claims, **characterized in that** a pre-filter is placed upstream the filter element (10).

5. Filter system according to claim 4, **characterized in that** the pre-filter is designed as cyclone pre-separator.

6. Filter system according to one of the above claims, **characterized in that** a secondary filter is placed downstream the filter element.

7. Filter system according to one of the above claims, **characterized in that** the housing for fastening a clean air pipe at the clean air side is provided with a connection piece, the transition between filter element and connection piece of the housing being shaped essentially conically.

8. Filter system according to one of the above claims, **characterized in that** the cross section of the dirty air intake is basically designed rectangularly and that the transition between the rectangular cross section and the round or oval filter element is designed such that it is favorable to the flow.

## Revendications

1. Système de filtre, notamment pour l'air aspiré d'un moteur à combustion interne, comprenant:
i) un carter avec au moins deux parties de carter (24, 25), le carter pouvant être divisé au niveau de la fixation de l'élément filtrant et
ii) un élément filtrant (10), l'élément filtrant (10) étant réalisé comme filtre enroulé,
a. le filtre enroulé (10) étant pourvu d'un profilé d'étanchéité (14) qui s'étend sur la circonférence de l'enroulement de filtre (11) et qui forme un bourrelet pouvant être tendu entre les deux parties du carter (24, 25), et le joint profilé étant un joint circonférentiel présentant un profil rectangulaire et constitué de mousse PUR ;
b. le filtre enroulé (10) ayant, comme noyau plaque en matière plastique (18) en forme d'élément plat en matière plastique qui est pourvu, du côté de l'arrivée du flux, d'une poignée (19) s'étendant, en sens axial, vers l'extérieur depuis le filtre enroulé (10).

2. Système de filtre selon la revendication 1, **caractérisé en ce que** l'élément filtrant (10) présente une partie centrale de carter (40) qui est disposée entre les deux moitiés de carter (35, 43).

3. Système de filtre selon la revendication 2, **caractérisé en ce que** la liaison de la partie centrale de carter (40) aux moitiés de carter (35, 43) est réalisée par des bandes de serrage.

4. Système de filtre selon une des revendications précédentes, **caractérisé en ce qu'**un pré-filtre est monté en amont de l'élément filtrant (10).

5. Système de filtre selon la revendication 4, **caractérisé en ce que** le pré-filtre est réalisé sous forme de pré-séparateur à cyclone.

6. Système de filtre selon une des revendications précédentes, **caractérisé en ce qu'**un filtre secondaire est monté en aval de l'élément filtrant.

7. Système de filtre selon une des revendications précédentes, **caractérisé en ce que** le carter est doté du côté de l'air pur d'une tubulure de raccord destinée à fixer un conduit d'air pur, la transition entre l'élément filtrant et la tubulure de raccord du carter étant essentiellement réalisée en forme de cône.

8. Système de filtre selon une des revendications précédentes, **caractérisé en ce que** la section de l'entrée de l'air brut est essentiellement réalisée en forme de rectangle et que la transition entre la section rectangulaire et l'élément filtrant rond ou ovale est conçue de manière favorable au flux.
